# EUROPEAN PATENT APPLICATION

(11) **EP 4 734 389 A1**
(43) Date of publication of application: **29.04.2026**
(21) Application number: 24832384.2
(22) Date of filing: 24.06.2024
(51) Int. Cl.: H04B 7/06, H04B 7/08, H04W 56/00, H04B 17/318, H04W 72/232, H04W 84/06

(54) **METHOD, USER EQUIPMENT, PROCESSING DEVICE, AND STORAGE MEDIUM FOR RECEIVING DOWNLINK SIGNAL, AND METHOD, BASE STATION, PROCESSING DEVICE, AND STORAGE MEDIUM FOR TRANSMITTING DOWNLINK SIGNAL**

(30) Priority: 26.06.2023 KR 20230081926
(71) Applicant: Hyundai Mobis Co., Ltd., Gangnam-gu Seoul 06141 (KR)
(72) Inventor: KIM, Tae Hyoung, Cheonan-si, Chungcheongnam-do 31168 (KR)
(74) Representative: Jung, Minkyu
(86) International application number: PCT/KR2024/008700
(87) International publication number: WO 2025/005605

(57) **Abstract**

According to the present disclosure, a UE may: receive a candidate beam set configuration regarding candidate beam indices for a cell; determine a beam switch instance; determine a beam index for the beam switch instance; and perform downlink reception(s) in a beam of the beam indices on the cell following the beam switch instance.

## Description

### TECHNICAL FIELD

The present disclosure relates to a wireless communication system.

### BACKGROUND

Various devices and technologies have emerged and been widespread, such as machine-to-machine (M2M) communication, machine type communication (MTC), and smartphones and tablet personal computers (PCs) requiring high data throughput. Accordingly, the amount of data required to be processed in a cellular network has been increasing very rapidly. To satisfy this rapidly increasing data processing demand, technologies for efficiently using more frequency bands, such as carrier aggregation and cognitive radio, and technologies for increasing a data capacity transmitted within a limited frequency, such as multiple antennas and multi-base station (BS) cooperation are under development.

To provide wireless communication services to locations where ground connections are technically very difficult or costly to provide wireless communication services through terrestrial networks, supporting wireless communication services through non-terrestrial networks (NTNs) has recently been considered.

### DISCLOSURE

### TECHNICAL PROBLEM

A method for providing a wireless communication signal to a user equipment (UE) accurately and efficiently via an airborne platform or space is required.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

In an aspect of the present disclosure, a method for receiving a downlink signal by a user equipment (UE) in a wireless communication system supporting a non-terrestrial network (NTN) is provided. The method includes receiving a candidate synchronization signal block (SSB) set configuration related to sets of candidate SSB indexes for a cell, wherein the sets of candidate SSB indexes include at least a first set of candidate SSB indexes and a second set of candidate SSB indexes, determining a first SSB index within the first set of candidate SSB indexes, based on the candidate SSB set configuration, performing a first downlink reception on the cell, based on a first SSB with the first SSB index, determining a first instance for SSB switching, determining a second SSB index for the first instance within the second set of candidate SSB indexes, and performing a second downlink reception on the cell, based on a second SSB with the second SSB index after the first instance.

In another aspect of the present disclosure, a UE for receiving a downlink signal in a wireless communication system supporting an NTN is provided. The UE includes at least one transceiver, at least one processor, and at least one computer memory operably connectable to the at least one processor and storing instructions that, when executed, cause the at least one processor to perform operations. The operations include receiving a candidate SSB set configuration related to sets of candidate SSB indexes for a cell, wherein the sets of candidate SSB indexes include at least a first set of candidate SSB indexes and a second set of candidate SSB indexes, determining a first SSB index within the first set of candidate SSB indexes, based on the candidate SSB set configuration, performing a first downlink reception on the cell, based on a first SSB with the first SSB index, determining a first instance for SSB switching, determining a second SSB index for the first instance within the second set of candidate SSB indexes, and performing a second downlink reception on the cell, based on a second SSB with the second SSB index after the first instance.

In an aspect of the present disclosure, a processing device in a wireless communication system is provided. The processing device includes at least one processor, and at least one computer memory operably connectable to the at least one processor and storing instructions that, when executed, cause the at least one processor to perform operations. The operations include receiving a candidate SSB set configuration related to sets of candidate SSB indexes for a cell, wherein the sets of candidate SSB indexes include at least a first set of candidate SSB indexes and a second set of candidate SSB indexes, determining a first SSB index within the first set of candidate SSB indexes, based on the candidate SSB set configuration, performing a first downlink reception on the cell, based on a first SSB with the first SSB index, determining a first instance for SSB switching, determining a second SSB index for the first instance within the second set of candidate SSB indexes, and performing a second downlink reception on the cell, based on a second SSB with the second SSB index after the first instance.

In another aspect of the present disclosure, a computer-readable storage medium is provided. The storage medium stores at least one program code including instructions that, when executed, cause at least one processor to perform operations. The operations include receiving a candidate SSB set configuration related to sets of candidate SSB indexes for a cell, wherein the sets of candidate SSB indexes include at least a first set of candidate SSB indexes and a second set of candidate SSB indexes, determining a first SSB index within the first set of candidate SSB indexes, based on the candidate SSB set configuration, performing a first downlink reception on the cell, based on a first SSB with the first SSB index, determining a first instance for SSB switching, determining a second SSB index for the first instance within the second set of candidate SSB indexes, and performing a second downlink reception on the cell, based on a second SSB with the second SSB index after the first instance.

In another aspect of the present disclosure, a method for transmitting a downlink signal by a base station (BS) in a wireless communication system supporting an NTN is provided. The method includes transmitting a candidate SSB set configuration related to sets of candidate SSB indexes for a cell, wherein the sets of candidate SSB indexes include at least a first set of candidate SSB indexes and a second set of candidate SSB indexes, determining a first SSB index within the first set of candidate SSB indexes, based on the candidate SSB set configuration, performing a first downlink transmission on the cell, based on a first SSB with the first SSB index, determining a first instance for SSB switching, determining a second SSB index for the first instance within the second set of candidate SSB indexes, and performing a second downlink transmission on the cell, based on a second SSB with the second SSB index after the first instance.

In another aspect of the present disclosure, a BS for receiving a downlink signal in a wireless communication system supporting an NTN is provided. The BS includes at least one transceiver, at least one processor, and at least one computer memory operably connectable to the at least one processor and storing instructions that, when executed, cause the at least one processor to perform operations. The operations include transmitting a candidate SSB set configuration related to sets of candidate SSB indexes for a cell, wherein the sets of candidate SSB indexes include at least a first set of candidate SSB indexes and a second set of candidate SSB indexes, determining a first SSB index within the first set of candidate SSB indexes, based on the candidate SSB set configuration, performing a first downlink transmission on the cell, based on a first SSB with the first SSB index, determining a first instance for SSB switching, determining a second SSB index for the first instance within the second set of candidate SSB indexes, and performing a second downlink transmission on the cell, based on a second SSB with the second SSB index after the first instance.

In another aspect of the present disclosure, a processing device in a wireless communication system is provided. The processing device includes at least one processor, and at least one computer memory operably connectable to the at least one processor and storing instructions that, when executed, cause the at least one processor to perform operations. The operations include transmitting a candidate SSB set configuration related to sets of candidate SSB indexes for a cell, wherein the sets of candidate SSB indexes include at least a first set of candidate SSB indexes and a second set of candidate SSB indexes, determining a first SSB index within the first set of candidate SSB indexes, based on the candidate SSB set configuration, performing a first downlink transmission on the cell, based on a first SSB with the first SSB index, determining a first instance for SSB switching, determining a second SSB index for the first instance within the second set of candidate SSB indexes, and performing a second downlink transmission on the cell, based on a second SSB with the second SSB index after the first instance.

In another aspect of the present disclosure, a computer-readable storage medium is provided. The storage medium stores at least one program code including instructions that, when executed, cause at least one processor to perform operations. The operations include transmitting a candidate SSB set configuration related to sets of candidate SSB indexes for a cell, wherein the sets of candidate SSB indexes include at least a first set of candidate SSB indexes and a second set of candidate SSB indexes, determining a first SSB index within the first set of candidate SSB indexes, based on the candidate SSB set configuration, performing a first downlink transmission on the cell, based on a first SSB with the first SSB index, determining a first instance for SSB switching, determining a second SSB index for the first instance within the second set of candidate SSB indexes, and performing a second downlink transmission on the cell, based on a second SSB with the second SSB index after the first instance.

In each aspect of the present disclosure, the method of the UE or the operations related to the UE may further include determining an SSB index for a second instance different from the first instance, within a set of candidate SSB indexes different from the second set of candidate SSB indexes among the sets of candidate SSB indexes.

In each aspect of the present disclosure, each of the sets of candidate SSB indexes may include a plurality of SSB indexes.

In each aspect of the present disclosure, each of the sets of candidate SSB indexes may include a single SSB index.

In each aspect of the present disclosure, the method of the UE or the operations related to the UE may include receiving an NTN configuration including satellite ephemeris information.

In each aspect of the present disclosure, the method of the BS or the operations related to the BS may include transmitting an NTN configuration including satellite ephemeris information.

In each aspect of the present disclosure, the candidate SSB set configuration may be included in the NTN configuration.

In each aspect of the present disclosure, the operations may further include starting a timer based on the determination of the first SSB index. The first instance for SSB switching may be based on expiration of the timer.

In each aspect of the present disclosure, the NTN configuration may include a value of the timer.

In each aspect of the present disclosure, the method of the UE or the operations related to the UE may include determining a value of the timer based on the satellite ephemeris information included in the NTN configuration, and reporting the value of the timer.

In each aspect of the present disclosure, the method of the BS or the operations related to the BS may include receive a value of the timer from a UE.

In each aspect of the present disclosure, the method of the UE or the operations related to the UE may further include receiving information related to a start time and a periodicity for SSB switching.

In each aspect of the present disclosure, the method of the BS or the operations related to the BS may further include transmitting information related to a start time and a periodicity for SSB switching.

In each aspect of the present disclosure, the first instance for SSB switching may be determined based on the information related to the start time and the periodicity.

In each aspect of the present disclosure, the method of the UE or the operations related to the UE may further include receiving information related to a start pattern and a periodicity for SSB switching.

In each aspect of the present disclosure, the method of the BS or the operations related to the BS may further include transmitting information related to a start pattern and a periodicity for SSB switching.

In each aspect of the present disclosure, the first instance for SSB switching may be determined based on the information related to the time pattern and the periodicity.

In each aspect of the present disclosure, the method of the UE or the operations related to the UE may include detecting a downlink control information (DCI) format including a beam switching indication. The first instance for SSB switching may be determined based on the detection of the DCI format.

In each aspect of the present disclosure, the method of the BS or the operations related to the BS may include transmitting a DCI format including a beam switching indication. The first instance for SSB switching may be determined based on the transmission of the DCI format.

In each aspect of the present disclosure, the DCI format may be received/transmitted in a common search space.

In each aspect of the present disclosure, the first instance for SSB switching may be determined, based on a reference signal received power (RSRP) based on the first SSB being equal to or less than a threshold.

The effects obtainable from the present disclosure are not limited to the effects described above, and other effects not described may be clearly understood by those skilled in the art to which the present disclosure belongs from the description below.

### ADVANTAGEOUS EFFECTS

According to some implementations of the present disclosure, a wireless communication signal may be efficiently transmitted/received via an airborne platform or space. Accordingly, the overall throughput of a wireless communication system may be increased.

According to some implementations of the present disclosure, the continuity of a wireless communication service may be guaranteed, the reliability of the wireless communication service may be strengthened through connectivity between various access technologies, and network resilience and reliability against disasters may be enhanced.

According to some implementations of the present disclosure, a beam may be changed without a beam failure recovery procedure.

According to some implementations of the present disclosure, a time required for beam switching may be reduced. Therefore, according to some implementations of the present disclosure, beam switching is possible with low latency.

The effects obtainable from the present disclosure are not limited to the effects described above, and other effects not described may be clearly understood by those skilled in the art to which the present disclosure belongs from the description below.

### BRIEF DESCRIPTION OF THE DRAWINGS

The appended drawings, which are included as a part of the detailed description to aid in the understanding of the implementations of the present disclosure, provide examples of the implementations of the present disclosure and, together with the detailed description, describe the implementations of the present disclosure, in which:
FIG. 1 illustrates an example of a communication system 1 to which implementations of the present disclosure may be applied;
FIG. 2 is a block diagram illustrating an example of communication devices that may perform a method according to the present disclosure;
FIG. 3 illustrates an example of a frame structure available in a 3^{rd} generation partnership project (3GPP) wireless communication system;
FIG. 4 illustrates a resource grid for the duration of a slot;
FIG. 5 illustrates a multi-beam operation in a 3GPP system;
FIG. 6 illustrates an example of transmitting SS/PBCH blocks (SSBs) on a cell;
FIG. 7 illustrates a non-terrestrial network (NTN) structure;
FIG. 8 illustrates an NTN deployment scenario;
FIG. 9 illustrates autonomous beam switching according to some implementations of the present disclosure;
FIG. 10 illustrates a beam switching trigger according to some implementations of the present disclosure;
FIGS. 11 and 12 illustrate beam switching methods according to some implementations of the present disclosure;
FIG. 13 illustrates part of a downlink reception flow according to some implementations of the present disclosure; and
FIG. 14 illustrates part of a downlink transmission flow according to some implementations of the present disclosure.

### DETAILED DESCRIPTION

Implementations of the present disclosure will be described below in detail with reference to the accompanying drawings. The following detailed description, along with the accompanying drawings, is intended to describe exemplary implementations of the present disclosure and does not intend to represent the only implementation form in which the present disclosure may be practiced. The following detailed description includes specific details to provide a thorough understanding of the present disclosure. However, those skilled in the art will understand that the present disclosure may be practiced without these specific details.

In some cases, well-known structures and devices may be omitted to avoid obscuring the concepts of the present disclosure, or may be shown in the form of a block diagram focusing on the core functions of each structure and device. Further, the same drawing reference numerals are used for the same components throughout the present disclosure.

The techniques, devices, and systems described below may be applied to various wireless multiple access systems.

However, the technical features of the present disclosure are not limited thereto. For example, even if the following detailed description is given based on 3GPP long term evolution (LTE) or 5^{th} generation (5G) technology, some implementations of the present disclosure are applicable to any other mobile communication system and systems (e.g., 6G) to be introduced in the future, except for matters inherent to 3GPP LTE/5G.

For terms and techniques used in the present disclosure that are not specifically described, reference may be made to 3GPP standard documents, such as 3GPP TS 23.304, 3GPP TS 23.285, 3GPP TS 23.287, 3GPP TS 24.587, 3GPP TS 36.211, 3GPP TS 36.212, 3GPP TS 36.213, 3GPP TS 36.300, 3GPP TS 36.321, 3GPP 36.322, 3GPP TS 36.323, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.322, 3GPP TS 38.323, and 3GPP TS 38.331.

In the examples of the present disclosure described later, when it is said that a device "assumes," this may mean that an entity transmitting a channel transmits the channel in a way corresponding to the "assumption." This may mean that an entity receiving the channel receives or decodes the channel in the way corresponding to the "assumption," under the premise that the channel was transmitted in the way corresponding to the "assumption."

In the present disclosure, a user equipment (UE) may be fixed or mobile, and include various devices communicating with a base station (BS) to transmit and/or receive user data and/or various pieces of control information. The UE may be referred to as a terminal equipment (TE), a mobile station (MS), a mobile terminal (MT), a user terminal (UT), or the like. In the present disclosure, a BS generally refers to a fixed station that communicates with a UE and/or another BS, and exchanges various data and control information with a UE and another BS. The BS may be referred to by other terms such as an advanced base station (ABS), a Node-B (NB), an evolved-NodeB (eNB), a gNB, a base transceiver system (BTS), an access point, a processing server (PS), or the like. For convenience of description, the term BS is collectively used regardless of the type or version of communication technology.

In the present disclosure, a node refers to a fixed point capable of transmitting/receiving wireless signals to/from a UE by communicating with the UE. Various types of BSs may be used as nodes regardless of their names. At least one antenna is installed in one node. The antenna may refer to a physical antenna, or it may refer to an antenna port, a virtual antenna, or an antenna group. A node is sometimes called a point.

The 3GPP communication system uses the concept of a cell to manage radio resources, and a cell associated with radio resources is distinguished from a cell of a geographical area. The "cell" of a geographical area may be understood as coverage where a node may provide a service using a carrier, and the "cell" of radio resources is associated with a bandwidth (BW), which is a frequency range configured by the carrier. Since downlink (DL) coverage, which is a range where a node may transmit a valid signal, and uplink (UL) coverage, which is a range where the node may receive a valid signal from a UE, depend on a carrier carrying the signals, the coverage of the node is also associated with the coverage of a "cell" of radio resources used by the node. Therefore, the term "cell" may sometimes be used to mean the coverage of a service by a node, sometimes radio resources, and sometimes a range where a signal using the radio resources may arrive with a valid strength.

A "cell" associated with radio resources may be defined as a combination of DL resources and UL resources, that is, a combination of a DL component carrier (CC) and a UL CC. A cell may be configured with DL resources alone, or with a combination of DL resources and UL resources. When carrier aggregation is supported, linkage between the carrier frequency of the DL resources (or DL CC) and the carrier frequency of the UL resources (or UL CC) may be indicated by system information. The carrier frequency may be the same as or different from the center frequency of each cell or CC.

In a wireless communication system, a UE receives information from a BS through a DL, and the UE transmits information to the BS through a UL. The information transmitted and/or received by the BS and the UE includes data and various pieces of control information, and various physical channels exist depending on the type/purpose of the information they transmit and/or receive.

The 3GPP communication standard defines DL physical channels corresponding to resource elements that carry information originating from higher layers, and DL physical signals corresponding to resource elements that are used by the physical layer but do not carry information originating from the higher layers. For example, the physical downlink shared channel (PDSCH), physical broadcast channel (PBCH), and physical downlink control channel (PDCCH) are defined as DL physical channels, and a reference signal (RS) and a synchronization signal are defined as DL physical signals. An RS, also called a pilot, refers to a predefined signal with a specific waveform known to both the BS and the UE. For example, a demodulation reference signal (DMRS) and a channel state information RS (CSI-RS) are defined as DL RSs. The 3GPP communication standard defines UL physical channels corresponding to resource elements that carry information originating from higher layers, and UL physical signals corresponding to resource elements that are used by the physical layer but do not carry information originating from the higher layers. For example, the physical uplink shared channel (PUSCH), physical uplink control channel (PUCCH), and physical random access channel (PRACH) are defined as UL physical channels, and a DMRS for UL control/data signals and a sounding reference signal (SRS) used for UL channel measurement are defined.

In the present disclosure, the PDCCH refers to a set of time-frequency resources (e.g., resource elements (REs)) carrying downlink control information (DCI), and the PDSCH refers to a set of time-frequency resources carrying DL data. Further, the PUCCH, PUSCH, and PRACH respectively refer to a set of time-frequency resources carrying uplink control information (UCI), UL data, and a random access preamble. When it is said below that a UE/BS transmits/receives the PUCCH/PUSCH/PRACH, this means that a UE/BS transmits/receives UCI/UL data/a random access preamble on or through the PUCCH/PUSCH/PRACH, respectively. Further, when it is said that a BS/UE transmits/receives the PBCH/PDCCH/PDSCH, this means that a BS/UE transmits/receives broadcast information/DCI/DL data on or through the PBCH/PDCCH/PDSCH, respectively.

In the present disclosure, radio resources (e.g., time-frequency resources) that the BS schedules or configures for the UE for transmission or reception of the PUCCH/PUSCH/PDSCH are sometimes referred to as PUCCH/PUSCH/PDSCH resources.

Since a communication device receives physical channels and/or physical signals in the form of wireless signals on a cell, it is not capable of selectively receiving only a wireless signal including a specific physical channel or physical signal through a radio frequency (RF) receiver, or selectively receiving only a wireless signal excluding a specific physical channel or physical signal through the RF receiver. In an actual operation, the communication device first receives a wireless signal on a cell through the RF receiver, converts the wireless signal which is an RF band signal into a baseband signal, and decodes a physical signal and/or physical channel within the baseband signal using one or more processors. Therefore, in some implementations of the present disclosure, when it is said that the communication device does not receive a physical signal and/or a physical channel, this does not actually mean that the communication device does not receive a wireless signal including the physical signal and/or the physical channel at all, but rather it means that the communication device does not attempt to reconstruct the physical signal and/or the physical channel from the wireless signal, that is, the communication device does not attempt to decode the physical signal and/or the physical channel.

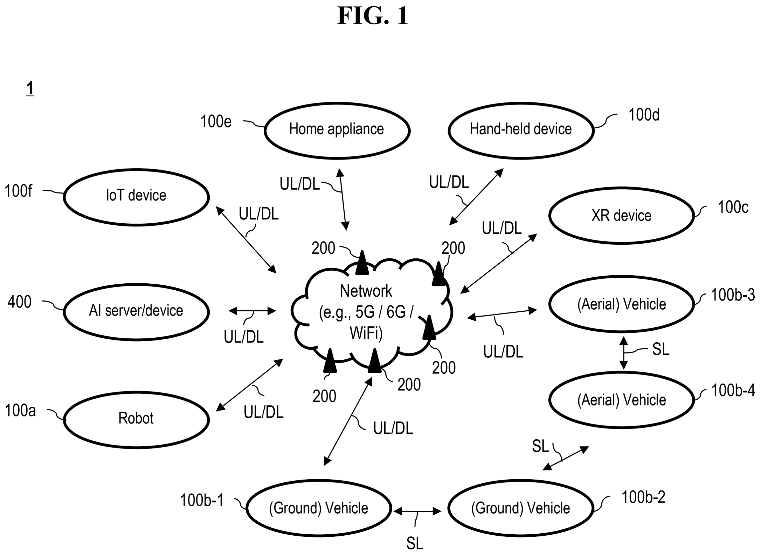

FIG. 1 illustrates an example of a communication system 1 to which implementations of the present disclosure may be applied.

Referring to FIG. 1, the communication system 1 to which the present disclosure is applied includes wireless devices, a BS, and a network. A wireless device may refer to a device that performs communication using a radio access technology (RAT) (e.g., 5G New RAT (NR), LTE (e.g., E-UTRA), WiFi, or 6G to be introduced in the future).

The wireless devices may include, but are not limited to, a robot 100a, vehicles 100b-1, 100b-2, 100b-3, and 100b-4, an extended reality (XR) device 100c, a handheld device 100d, a home appliance 100e, an internet of thing (IoT) device 100f, and an artificial intelligence (AI) device/server 400. For example, the vehicles may include a ground vehicle equipped with a wireless communication function, an autonomous driving vehicle, and a vehicle capable of performing vehicle-to-vehicle communication. Herein, the vehicles may include an unmanned aerial vehicle (UAV) (e.g., a drone) and an urban air mobility (UAM) (e.g., unmanned aerial transportation). The XR device may include an augmented reality (AR)/virtual reality (VR)/mixed reality (MR) device. The handheld device may include a smartphone, a smart pad, a wearable device (e.g., a smart watch and smart glasses), a computer (e.g., a laptop), and the like. The home appliance may include a TV, a refrigerator, a washing machine, and the like. The IoT device may include a sensor, a smart meter, and the like. For example, a BS and a network may also be implemented as wireless devices, and a specific wireless device may operate as a BS/network node for other wireless devices.

The wireless devices 100a to 100f may be connected to a network through a BS 200. AI technology may be applied to the wireless devices 100a to 100f, and the wireless devices 100a to 100f may be connected to the AI server 400 through the network. Although the wireless devices 100a to 100f may communicate with each other through the BS 200/network, they may also communicate directly (e.g., sidelink communication) without intervention of the BS/network. For example, the vehicles 100b-1, 100b-2, 100b-3, and 100b-4 may perform direct communication (e.g., vehicle-to-vehicle (V2V)/vehicle-to-everything (V2X) communication). Further, the IoT device (e.g., sensor) may communicate directly with another IoT device (e.g., sensor) or other wireless devices 100a to 100f.

Wireless communication/connection may be established between the wireless devices 100a to 100f/BS 200 and the BS 200/wireless devices 100a to 100f. The wireless communication/connection may be established through various wireless access technologies (e.g., 5G NR) for UL/DL communication and sidelink (SL) communication (or D2D communication). Through the wireless communication/connection (UL/DL or SL), the wireless devices and the BS/wireless devices may transmit/receive wireless signals to/from each other. To this end, at least some of various configuration information configuring procedures, various signal processing procedures (e.g., channel encoding/decoding, modulation/demodulation, resource mapping/demapping, and so on), and a resource allocation procedure, for transmission/reception of wireless signals, may be performed based on various proposals of the present disclosure.

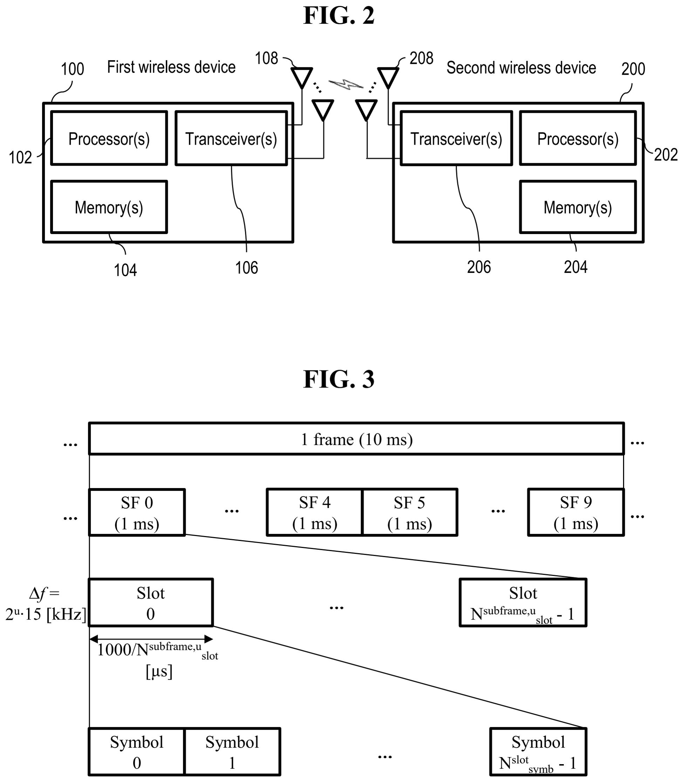

FIG. 2 is a block diagram illustrating an example of communication devices that may perform a method according to the present disclosure. Referring to FIG. 2, a first wireless device 100 and a second wireless device 200 may transmit and/or receive wireless signals through various wireless access technologies. The {first wireless device 100, second wireless device 200} may correspond to the {wireless device 100x, BS 200} and/or the {wireless device 100x, wireless device 100x} in FIG.1.

Each of the first wireless device 100 and the second wireless device 200 may include one or more processors 102 or 202 and one or more memories 104 or 204, and may further include one or more transceivers 106 or 206 and/or one or more antennas 108 or 208. The processors 102 and 202 may control the memories 104 and 204 and/or the transceivers 106 and 206, and may be configured to implement the functions, procedures, and/or methods described/proposed below. For example, the processors 102 and 202 may process information in the memories 104 and 204 to generate first information/signal, and then transmit a wireless signal including the first information/signal through the transceivers 106 and 206. In addition, the processors 102 and 202 may receive a wireless signal including second information/signal through the transceivers 106 and 206, and then store information obtained from signal processing of the second information/signal in the memories 104 and 204. The memories 104 and 204 may be connected to the processors 102 and 202 and store various pieces of information related to the operations of the processors 102 and 202. For example, the memories 104 and 204 may store software code including instructions for performing some or all of the processes controlled by the processors 102 and 202 or for performing the procedures and/or methods described/proposed below. Herein, the processors 102 and 202 and the memories 104 and 204 may be a part of a communication modem/circuit/chip designed to implement wireless communication technology. The transceivers 106 and 206 may be connected to the processors 102 and 202 and transmit and/or receive wireless signals through the one or more antennas 108 and 208. Each of the transceivers 106 and 206 may include a transmitter and/or a receiver.

One or more protocol layers may be implemented by the one or more processors 102 and 202, to which the present disclosure is not limited. For example, the one or more processors 102 and 202 may implement one or more layers (e.g., functional layers such as the physical (PHY) layer, the medium access control (MAC) layer, the radio link control (RLC) layer, the packet data convergence protocol (PDCP) layer, the radio resource control (RRC) layer, and the service data adaption protocol (SDAP)). The one or more processors 102 and 202 may generate one or more protocol data units (PDUs) and/or one or more service data units (SDUs) according to the functions, procedures, proposals, and/or methods described in the present disclosure. The one or more processors 102 and 202 may generate a message, control information, data, or information according to the functions, procedures, proposals, and/or methods described in the present disclosure. The one or more processors 102 and 202 may generate a signal (e.g., a baseband signal) including a PDU, an SDU, a message, control information, data, or information, and provide it to the one or more transceivers 106 and 206 according to the functions, procedures, proposals, and/or methods described in the present disclosure. The one or more processors 102 and 202 may receive a signal (e.g., a baseband signal) from the one or more transceivers 106 and 206, and obtain a PDU, an SDU, a message, control information, data, or information according to the functions, procedures, proposals, and/or methods described in the present disclosure.

The one or more processors 102 and 202 may be referred to as controllers, microcontrollers, microprocessors, or microcomputers. The one or more processors 102 and 202 may be implemented in hardware, firmware, software, or a combination thereof, and the firmware or software may be implemented to include a module, a procedure, a function, and the like. The firmware or software configured to perform the functions, procedures, proposals, and/or methods described in the present disclosure may be included in the one or more processors 102 and 202 or stored in the one or more memories 104 and 204 and driven by the one or more processors 102 and 202. The functions, procedures, proposals, and/or methods described in the present disclosure may be implemented using firmware or software in the form of code, an instruction, and/or a set of instructions.

The one or more memories 104 and 204 may be connected to the one or more processors 102 and 202 and store various types of data, signals, messages, information, programs, code, directions, and/or instructions. The one or more memories 104 and 204 may be located inside and/or outside the one or more processors 102 and 202. Further, the one or more memories 104 and 204 may be connected to the one or more processors 102 and 202 through various technologies such as wired or wireless connections.

The one or more transceivers 106 and 206 may transmit/receive user data, to/from one or more other devices, control information, wireless signals/channels, and the like mentioned in the methods and/or operational flowcharts of the present disclosure. Additionally, the one or more processors 102 and 202 may control the one or more transceivers 106 and 206 to transmit/receive user data, control information, or wireless signals to/from one or more other devices. Further, the one or more transceivers 106 and 206 may be connected to the one or more antennas 108 and 208 and configured to transmit and/or receive user data, control information, wireless signals/channels, and the like, mentioned in the functions, procedures, proposals, methods, and/or operational flowcharts described in the present disclosure, through the one or more antennas 108 and 208. In the present disclosure, the one or more antennas may be multiple physical antennas or multiple logical antennas (e.g., antenna ports). The one or more transceivers 106 and 206 may convert the received wireless signals/channels from RF band signals to baseband signals in order to process the received user data, control information, wireless signals/channels, and the like, using the one or more processors 102 and 202. The one or more transceivers 106 and 206 may convert the user data, control information, wireless signals/channels, and the like, processed using the one or more processors 102 and 202, from baseband signals to RF band signals. For this purpose, the one or more transceivers 106 and 206 may include an analog oscillator and/or a filter.

In the present disclosure, the at least one memory 104 or 204 may store instructions or programs that, when executed, may cause the at least one processor 102 or 202 operably connected to the at least one memory to perform operations according to some embodiments or implementations of the present disclosure.

In the present disclosure, a non-transitory computer-readable storage medium may store at least one instruction or computer program that, when executed by at least one processor, may cause the at least one processor to perform operations according to some embodiments or implementations of the present disclosure.

FIG. 3 illustrates an example of a frame structure available in a 3GPP wireless communication system.

The frame structure in FIG. 3 is merely an example, and the number of subframes, the number of slots, and the number of symbols in a frame may vary. In some wireless communication systems, different OFDM numerologies (e.g., subcarrier spacings (SCSs)) may be configured between a plurality of cells aggregated for one UE. Accordingly, the duration (in absolute time) of a time resource (e.g., subframe, slot, or transmission time interval (TTI)) composed of the same number of symbols may be configured differently between the aggregated cells. Herein, a symbol may include an OFDM symbol (or cyclic prefix-orthogonal frequency division multiplexing (CP-OFDM) symbol) or an SC-FDMA symbol (or discrete Fourier transform-spread-OFDM (DFT-s-OFDM) symbol). In the present disclosure, the terms symbol, OFDM-based symbol, OFDM symbol, CP-OFDM symbol, and DFT-s-OFDM symbol may be used interchangeably.

Referring to FIG. 3, UL and DL transmissions are organized into frames. Each frame has a duration of T_{f}= (△fₘₐₓ*N_{f}/100)*T_{c}=10ms, where a basic time unit T_{c}= 1/(Δfₘₐₓ*N_{f}), and △fₘₐₓ=480*10³Hz, and N_{f}=4096. For reference, a sampling time Tₛ=1/(△f_{ref}*N_{f,ref}) where △f_{ref}=15*10³Hz and N_{f,ref}=2048. T_{c} and Tₛ have a relationship of a constant κ=Tₛ/T_{c}=64. A frame includes 10 subframes, and the duration T_{sf} of a single frame is 1ms. A subframe is further divided into slots, and the number of slots within a subframe depends on an SCS. Each slot may include *N*^{slot}_{symb} symbols based on a cyclic prefix (CP). For example, in some scenarios, each slot includes 14 OFDM symbols in the case of a normal CP, and 12 OFDM symbols in the case of an extended CP. The numerology depends on an exponentially scalable SCS, △f=2^{u}*15kHz. The following table illustrates the number *N*^{slot}_{symb} of OFDM symbols per slot, the number *N*^{frame,u}ₛₗₒₜ of slots per frame, and the number *N*^{subframe,u}ₛₗₒₜ of slots per subframe, for the normal CP.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

The following table illustrates the number of OFDM symbols per slot, the number of slots per frame, and the number of slots per subframe according to an SCS, △=2^{u}*15kHz, for the extended CP.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For an SCS u, slots are numbered by n^{u}ₛ ∈ {0, ..., n^{subframe,u} ₛₗₒₜ-1} in ascending order within a subframe, and by ^{u}_{s,f} ∈ {0, ..., n^{frame,u} ₛₗₒₜ-1} in ascending order within a frame.

While the implementations of the present disclosure are described using a slot as a minimum time unit for scheduling UL, DL, and SL transmissions, the minimum time unit for scheduling may be referred to by a different term depending on a wireless communication system. For example, the minimum time unit for scheduling a transmission is referred to as a subframe or TTI in an LTE system, whereas the minimum time unit for scheduling is referred to as a slot in an NR system.

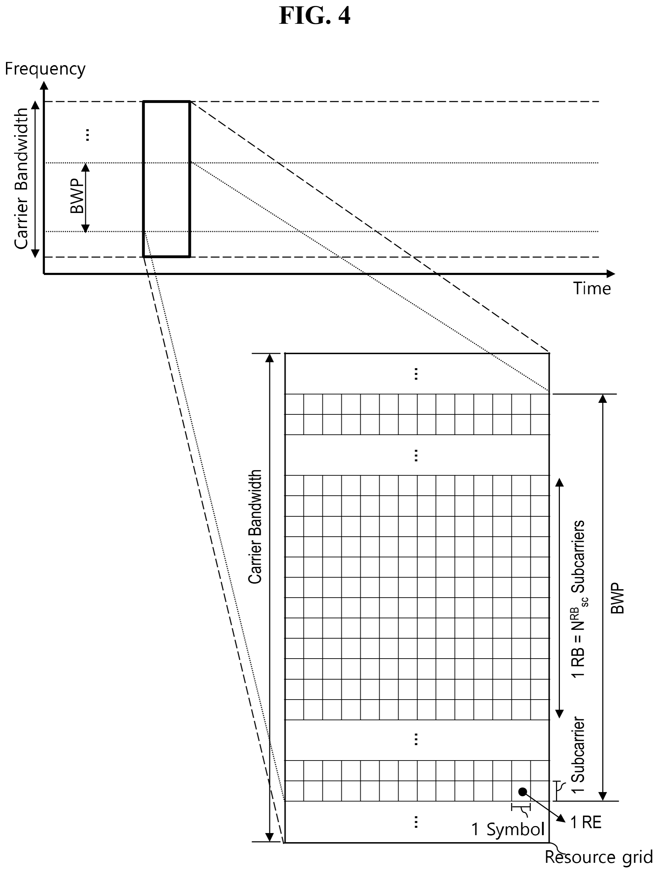

FIG. 4 illustrates a resource grid for the duration of a slot. A slot includes a plurality of (e.g., *N*^{slot}_{symb}) symbols in the time domain. For each numerology (e.g., SCS) and carrier, a resource grid of *N*^{size}_{grid,x}**N*^{RB}_{sc} subcarriers by *N*^{subframe,u}_{symb} OFDM symbols is defined, starting from a common resource block (CRB), *N*^{start,u}_{grid} indicated by higher layer signaling (e.g., RRC signaling). Herein, *N*^{size,u}_{grid,x} is the number of resource blocks (RBs) in the resource grid, and the subscript x is DL for a DL and UL for a UL. *N*^{RB}_{sc} is the number of subcarriers per RB, and in the 3GPP wireless communication system, *N*^{RB}_{sc} is typically 12. For a given antenna port *p,* an SCS configuration *u,* and a transmission direction (DL or UL), there is one resource grid. A carrier BW, *N*^{size,u}_{grid} for the SCS configuration u is given to the UE by a higher layer parameter (e.g., RRC parameter) from the network. Each element in the resource grid for the antenna port p and the SCS configuration u is referred to as an RE, and one complex-valued symbol may be mapped to each RE. Each RE in the resource grid is uniquely identified by an index k in the frequency domain and an index *l* indicating a symbol position relative to a reference point in the time domain. RBs may be classified into common resource blocks (CRBs) and physical resource blocks (PRBs). CRBs are numbered upwards from 0 in the frequency domain for the SCS configuration *u.* The center of subcarrier 0 of CRB 0 for the SCS configuration *u* coincides with 'point A', which is a common reference point for RB grids. PRBs for the SCS configuration u are defined within a bandwidth part (BWP) and numbered from 0 to *N*^{size,u}_{BWP,i}-1 where i is the number of the BWP. The relationship between CRB n^{u}_{CRB} and PRB n_{PR} within BWP i is as follows: n^{u}_{PRB=}n^{u}_{CRB}+*N*^{start,u}_{BWP,i} where *N*^{start,u}_{BWP,i} is a CRB in which the BWP starts relative to CRB 0. A BWP includes a plurality of contiguous RBs in the frequency domain. For example, a BWP is a subset of contiguous CRBs defined for a given numerology uᵢ within BWP i on a given carrier. A carrier may include up to N (e.g., 5) BWPs. The UE may be configured to have one or more BWPs in a given CC. Data communication may be performed in an activated BWP, and only a predetermined number of (e.g., 1) BWPs configured for the UE may be activated on the carrier.

In the 3GPP system, a control resource set (CORESET), which is a set of time-frequency resources where the UE may monitor a PDCCH, may be defined and/or configured. One or more CORESETs may be configured for the UE. A CORESET has a duration of 1 to 3 OFDM symbols and includes a set of PRBs. The PRBs included in the CORESET and the duration of the CORESET may be provided to the UE through higher layer signaling (e.g., RRC signaling). A set of PDCCH candidates within the configured CORESET(s) are monitored according to corresponding search space sets. In the present disclosure, monitoring implies decoding (also known as blind decoding) each PDCCH candidate according to monitored DCI formats. A master information block (MIB) on the PBCH provides the UE with parameters (e.g., CORESET#0 configuration) for monitoring a PDCCH that schedules a PDSCH carrying system information block 1 (SIB1). The PBCH may also indicate that there is no associated SIB1. In this case, another frequency in which an SSB associated with SIB1 is to be searched for as well as a frequency range where the UE may assume no SSB is associated with SIB1 may be indicated to the UE. CORESET#0, which is a CORESET for scheduling at least SIB1, may be configured by the MIB or dedicated RRC signaling.

A set of PDCCH candidates monitored by the UE are defined in terms of PDCCH search space sets. A search space set may be a common search space (CSS) set or a UE-specific search space (USS) set. Each CORESET configuration is associated with one or more search space sets, and each search space set is associated with one CORESET configuration.

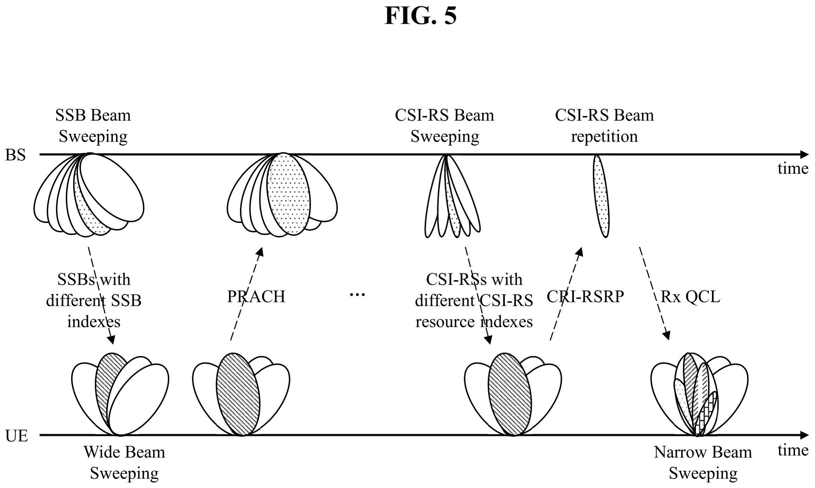

FIG. 5 illustrates a multi-beam operation in a 3GPP system.

5G and a 3GPP system beyond 5G may use an ultra-high frequency band, for example, a millimeter wave frequency band of 6GHz or more, to maintain a high transmission rate for multiple users by using a wide frequency band. However, the millimeter wave frequency band has the frequency characteristic that signal attenuation rapidly increases with a distance due to the use of too high a frequency band. Therefore, when using a band of at least 6GHz, the 3GPP system uses a narrow beam transmission technique which solves the problem of reduced coverage caused by rapid propagation attenuation by concentrating signal energy in a specific direction, instead of an omnidirectional transmission, to compensate for the rapid propagation attenuation. However, when a service is provided using only one narrow beam, an area covered by one BS becomes narrow, and thus the BS aggregates multiple narrow beams to provide a service with a wide beam.

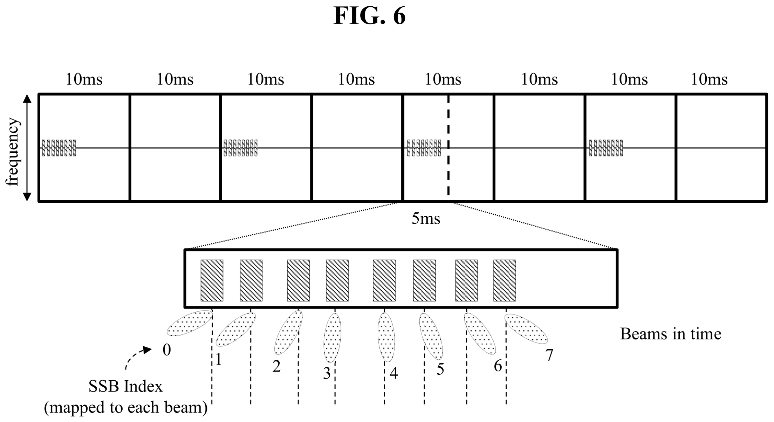

FIG. 6 illustrates an example of transmitting SS/PBCH blocks (SSBs) on a cell.

In the 3GPP system, each SSB is associated with a beam. For example, during a half-frame, different SSBs may be transmitted in different spatial directions (using different beams that span the coverage area of a cell). The possible time positions of SSBs within a half-frame are determined by an SCS, and the periodicity of half-frames in which the SSBs are transmitted is configured by the network. Multiple SSBs may be transmitted within the frequency span of a carrier. Different indexes of SSBs transmitted/detected on one cell may correspond to different BS (wide) transmission (Tx) beams.

In the 3GPP system, a multi-beam operation is based on beam switching/beam scanning in which signals are transmitted/received by changing beam directions over time. For example, assuming that the BS supports up to N Tx beams, it may perform beam sweeping by transmitting an SSB including a PSS, an SSS, and a PBCH in each of up to N beam directions (refer to SSB beam sweeping in FIG. 5).

Referring again to FIG. 5, the UE may measure the power of SSB(s) received from BS Tx beams by using a wide reception (Rx) beam and select its preferred beam. For example, the UE may select one SSB among the detected/received SSBs. The 3GPP system specifies specific mapping between SSBs and random access channel (RACH) occasions to allow the network to identify which beam the UE has selected. An RACH occasion is time and frequency resources available for transmission of an RACH preamble. Information about how many SSBs may be mapped to one RACH occasion and how many preamble indexes may be mapped to a single SSB may be provided to the UE by the network. For example, when the network configures the number of SSBs per RACH occasion as 1/N, one SSB is associated with N RACH occasions (where N is a positive integer), and when the network configures the number of SSBs per RACH occasion as N, N preamble indexes are mapped to a single SSB. The UE selects an SSB among the SSBs detected/received on the cell, and selects an RACH occasion based on the selected SSB, for transmission. The BS may determine which SSB was selected by the UE among the SSBs transmitted on the cell by detecting an RACH occasion including a PRACH from the UE, through BS Rx beam sweeping. The BS may determine a BS Tx beam for communication with the UE, based on the SSB selected by the UE.

For finer beam tuning, a CSI-RS may be transmitted. The BS may perform beam refinement using CSI-RS transmissions in narrower beams around the BS Tx beam which has been determined based on the RACH occasion where the PRACH from the UE was detected (refer to CSI-RS beam sweeping in FIG. 5). The UE may measure the power of the CSI-RSs received on these BS Tx narrow beams and report a preferred one of the BS Tx narrow beams to the BS. For example, the UE may measure CSI-RSs in CSI-RS resources, select at least one CSI-RS resource, and report a CSI-RS resource indicator (CRI) for the selected CSI-RS resource and its corresponding reference signal received power (RSRP) to the BS. The BS may determine a BS Tx narrow beam based on the CRI and/or the RSRP reported by the UE, and repeatedly transmit the CSI-RS on the BS Tx narrow beam (refer to P3 CSI-RS beam sweeping in FIG. 5) to allow the UE to perform Rx beam sweeping for detecting an appropriate UE Rx beam. The UE may detect an appropriate UE Rx beam by measuring the power of a CSI-RS received on each of its UE Rx beams.

The UE may detect a beam failure using a CSI-RS/SSB. For example, when the L1-RSRP of a beam to be connected drops below a specific limit, the UE determines a beam failure and searches for another candidate beam with good quality. When a predefined number of beam failures are detected, a beam failure recovery (BFR) procedure may be triggered with the candidate beam. The network may provide the UE with the identifier (ID) of an SSB transmitted by the cell, which is used to determine the candidate beam for BFR, and a preamble index which is used for performing BFR, when the candidate beam identified by the SSB is selected. Upon occurrence of the predefined number of beam failures, the UE transmits a BFR request to the network by transmitting a PRACH associated with the SSB ID, and the network provides a random access response (RAR) for the BFR request to the UE.

When receiving a PDSCH, the UE may assume that the DM-RS port of the PDSCH is quasi co-located (QCLed) with an associated SSB, in relation to the Doppler shift, Doppler spread, average delay, delay spread, and spatial Rx parameters. A transmission configuration indicator (TCI) state may be configured/indicated for a PDCCH/PDSCH. The TCI state may include quasi co-location (QCL) information. For example, the UE may be configured with M TCI-state configurations provided by higher layer parameters from the BS, so that the UE may decode a PDSCH according to a detected PDCCH with DCI for a given serving cell. Each TCI-state includes parameters that establish a QCL relationship between one or two DL RSs and the DM-RS ports of the PDSCH, the DM-RS ports of the PDCCH, or the CSI-RS port(s) of CSI-RS resources. The QCL relationship is configured by a higher layer parameter qcl-type1 for a first DL RS and (if configured) a higher layer parameter qcl-type2 for a second DL RS. A QCL type corresponding to each DL RS is given by a higher layer parameter qcl-type within QCL-Info and may have one of the following values:
- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

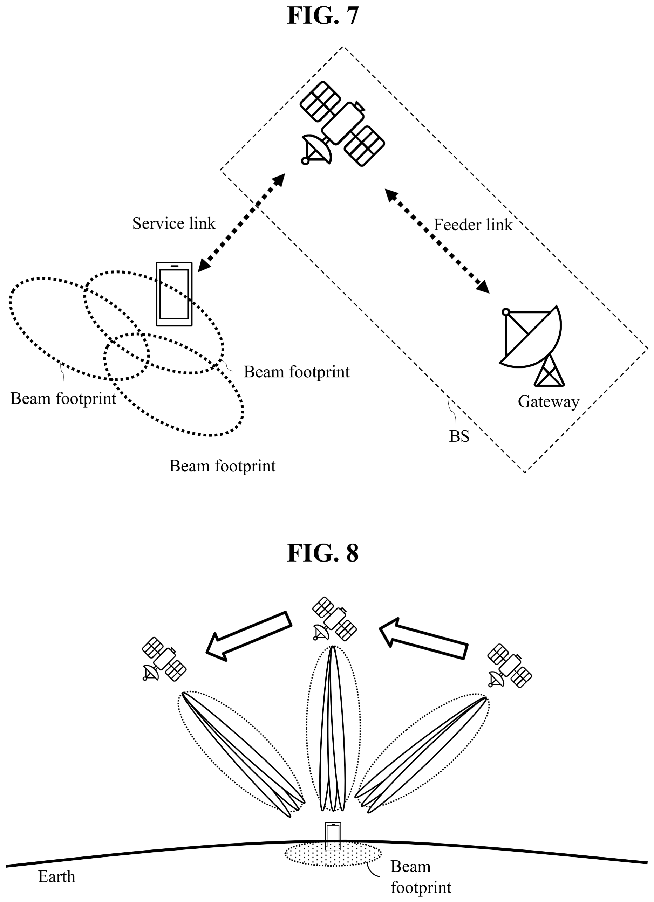

FIG. 7 illustrates a non-terrestrial network (NTN) structure.

Discussions have recently been underway to enable the 3GPP system to support an NTN. An NTN is any network including non-terrestrial flying objects. When wireless communication through an NTN is available in the 3GPP system, the continuity of a wireless communication service may be guaranteed, the reliability of the wireless communication service may be strengthened through connectivity between various access technologies, and network resilience and reliability against disasters may be enhanced. For convenience of description, the following terms are used.
- NTN: A wireless access network including BSs, which provides non-terrestrial radio access to UEs by using an NTN payload mounted on an airborne or space-borne NTN vehicle, and an NTN gateway.
- NTN Gateway: An earth station located on the surface of the earth, which provides connectivity to the NTN payload by using a feeder link. The NTN gateway is a transport network layer (TNL) node.
- NTN Payload: A network node mounted on a satellite or high altitude platform station providing a satellite or high altitude platform connection, which provides connectivity functionalities between a service link and a feeder link.
- Service Link: A wireless link between the NTN payload and the UE.
- Feeder Link: A wireless link between the NTN gateway and the NTN payload.
- Satellite: A space-borne vehicle orbiting the earth while carrying the NTN payload.
- NTN Cell: A cell that provides the service link between the UE and the NTN payload.

Referring to FIG. 7, an NTN gateway is connected to an NTN payload mounted on a satellite or a high altitude platform system (HAPS) via a feeder link. The NTN payload is connected to a UE via a service link. The NTN gateway may be connected to the core network of a 3GPP system.

The NTN payload transfers a wireless protocol received from the UE via the service link to the NTN gateway via the feeder link, and transfers a wireless protocol received from the NTN gateway via the feeder link to the UE via the service link. The NTN gateway may service multiple NTN payloads, and an NTN payload may be serviced by multiple NTN gateways. For an NTN, a tracking area may correspond to a fixed geographical area, and mapping between them may be configured by a wireless access network.

The following three types of service links are supported:
- Earth-fixed Service Link: A service link provided by beam(s) that continuously cover the same geographical areas all the time (e.g., for GEO satellites).
- Quasi-Earth-fixed Service Link: A service link provided by beam(s) that cover one geographical area for a limited period and another geographical area for another period (e.g., for NGSO satellites generating steerable beams).
- Earth-moving Service Link: A service link provided by beam(s) whose coverage area slides over the surface of the earth (e.g., for NGSO satellites generating fixed or non-steerable beams).

An NTN may include a satellite communication network, an air-to-ground network, a UAV network, and the like. One of the main concepts of the NTN is that NTN cells are provided from non-geostationary orbit (NGSO) satellites that periodically orbit around the earth. Each satellite has its own orbital trajectory, which is included in satellite ephemeris information. Based on the satellite ephemeris information, the network may predict feeder link switchover, manage UE mobility, and perform radio resource control. A BS providing NTN access may broadcast orbital trajectory information or ephemeris information related to coordinates for the NTN payload. EphemerisInfo may provide a satellite ephemeris in the format of position and velocity state vectors or in the format of orbital parameters. The following tables illustrate an EphemerisInfo information element (IE) broadcast by the BS and the descriptions of the fields of the EphemerisInfo IE.

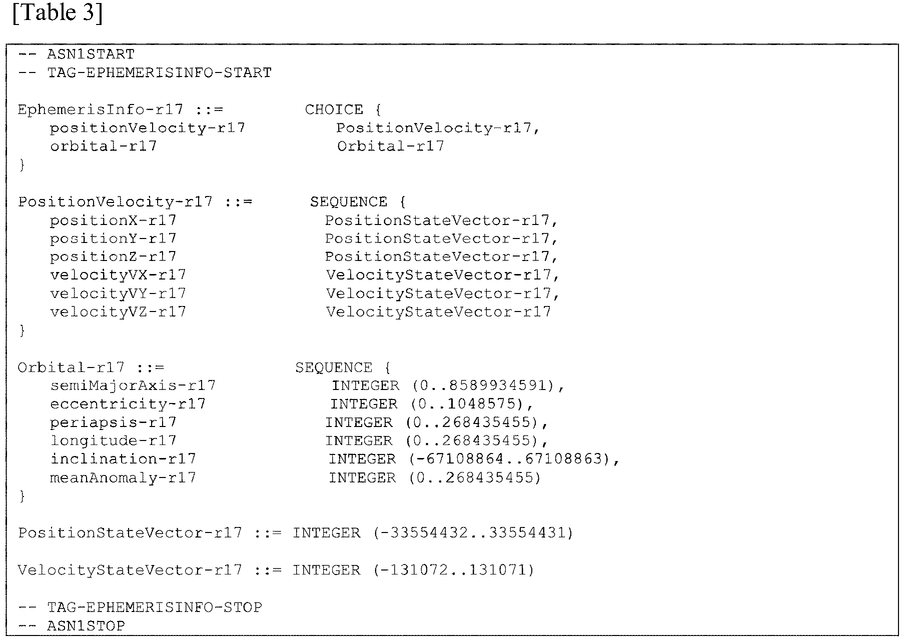

**[Table 4]**

| ***Ephemerisinfo* field descriptions** |
|---|
| ***eccentricity*** |
| Satellite orbital parameter: eccentricity e, see NIMA TR 8350.2 [71]. Unit is radian. |
| Step of 1.431 * 10⁻⁸. Actual value = field value * (1.431 * 10⁻⁸). |
| ***inclination*** |
| Satellite orbital parameter: inclination i, see NIMA TR 8350.2 [71]. Unit is radian. |
| Step of 2.341* 10⁻⁸ rad. Actual value = field value * (2.341* 10⁻⁸). |
| ***longitude*** |
| Satellite orbital parameter: longitude of ascending node Ω, see NIMA TR 8350.2 [71]. Unit is radian. |
| Step of 2.341* 10⁻⁸ rad. Actual value = field value * (2.341* 10⁻⁸). |
| ***meanAnomaly*** |
| Satellite orbital parameter: Mean anomaly M at epoch time, see NIMA TR 8350.2 [71]. Unit is radian. |
| Step of 2.341* 10⁻⁸ rad. Actual value = field value * (2.341* 10⁻⁸). |
| ***ZZperiapsis*** |
| Satellite orbital parameter: argument of periapsis ω, see NIMA TR 8350.2 [71]. Unit is radian. |
| Step of 2.341* 10⁻⁸ rad. Actual value = field value * (2.341* 10⁻⁸). |
| ***positionX, positionY, positionZ*** |
| X, Y, Z coordinate of satellite position state vector in ECEF. Unit is meter. |
| Step of 1.3 m. Actual value = field value * 1.3. |
| ***semiMajorAxis*** |
| Satellite orbital parameter: semi major axis α, see NIMA TR 8350.2 [71]. Unit is meter. |
| Step of 4.249 * 10⁻³ m. Actual value = 6500000 + field value * (4.249 * 10⁻³). |
| ***velocityVX, velocityVY, velocityVZ*** |
| X, Y, Z coordinate of satellite velocity state vector in ECEF. Unit is meter/second. |
| Step of 0.06 m/s. Actual value = field value * 0.06. |

Satellite communication networks may include low earth orbit (LEO) satellites, medium earth orbit (MEO) satellites, and geosynchronous earth orbit (GEO) satellites as follows.

**[Table 5]**

| **Platforms** | **Altitude range** | **Orbit** | **Typical beam footprint size** |
|---|---|---|---|
| Low-Earth Orbit (LEO) | 300 - 1500 km | Circular around the earth | 100 - 1000 km |
| Medium-Earth Orbit (MEO) | 7000 - 25000 km | | 100 - 1000 km |
| Geostationary Earth Orbit (GEO) | 35786 km | National station keeping position fixed | 200 - 2500 km |

NTN deployment scenarios are given as follows.

**[Table 6]**

| **Main attributes** | **Deployment-D1** | **Deployment-D2** | **Deployment-D3** | **Deployment-D4** | **Deployment-D5** |
|---|---|---|---|---|---|
| Platform orbit and altitude | GEO at 35 786 km | GEO at 35 786 km | Non-GEO down to 600 km | Non-GEO down to 600 km | UAS between 8 km and 50 km including HAPS |
| Carrier Frequency on the link between Air / space-borne platform and UE | Around 20 GHz for DL | Around 2 GHz for both DL and UL (S band) | Around 2 GHz for both DL and UL (S band) | Around 20 GHz for DL | Below and above 6 GHz |
| | Around 30 GHz for UL (Ka band) | | | Around 30 GHz for UL (Ka band) | |
| Beam pattern | Earth fixed beams | Earth fixed beams | Moving beams | Earth fixed beams | Earth fixed beams |

Referring to the NTN Deployment-D3 scenario and the NTN Deployment-D4 scenario, the S-band of 2 to 4GHz and the Ka-band of 26 to 40GHz are considered as satellite frequency bands for LEO.

FIG. 8 illustrates an NTN deployment scenario. In particular, FIG. 8 illustrates a case where a multi-beam operation is applied to the NTN Deployment-D4 scenario among the NTN deployment scenarios illustrated in Table 6.

Since LEO satellites operating in the Ka-band suffer severe path loss, a multi-beam operation may be considered for LEO satellites in the Ka-band as illustrated in FIG. 8.

According to the NTN Deployment-D4 scenario, a beam footprint formed on the ground by beams steered toward an area on the ground from a satellite is earth-fixed. However, from the perspective of a UE on the ground, a beam direction that the UE should watch changes over time. A description will be given below of some implementations of the present disclosure regarding the case where a multi-beam operation is applied in the NTN Deployment-D4 scenario.

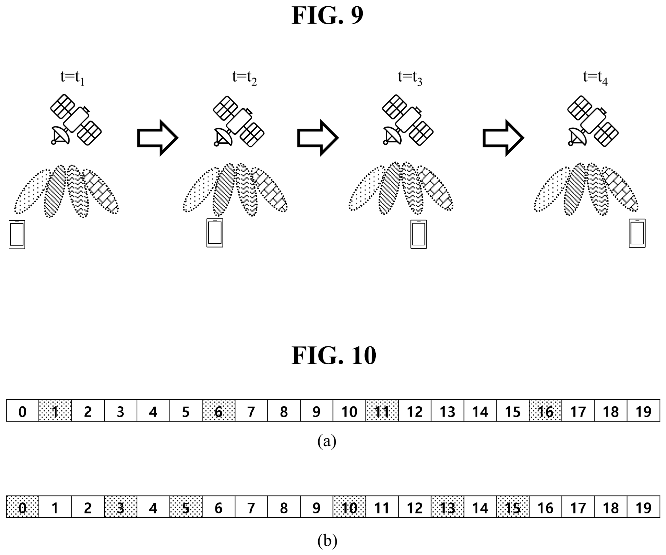

FIG. 9 illustrates autonomous beam switching according to some implementations of the present disclosure.

The question is how to track a corresponding beam for a moving NTN cell to which a multi-beam operation is applied. As illustrated in FIG. 8, in some implementations, even if a beam footprint or tracking area is fixed, a Tx beam of an NTN payload for a UE continuously changes. According to the conventional 5G NR procedure (e.g., refer to FIG. 5), the UE performs a BFR procedure and a link recovery procedure. Since the BFR procedure and the link recovery procedure are time-consuming, they may cause a delay in wireless communication. An NTN has characteristics such as a long propagation delay, wide beam coverage, a large delay variation, BS mobility, and high Doppler shift, unlike a terrestrial network. Considering the delay caused by these NTN characteristics, application of a beam switching procedure including the BFR procedure and the link recovery procedure to the NTN may increase the communication delay.

However, while it is difficult to predict a BS Tx beam for a UE according to movement of the UE in the conventional 5G NR procedure, the BS and/or the UE may predict the movement of a satellite because the orbit of the satellite is fixed, and the position/velocity of the satellite may be provided to the UE through ephemeris information. Considering that the movement of the satellite is predictable by the BS/UE, some implementations of the present disclosure for autonomous beam switching (without a BRF) as illustrated in FIG. 8 will be described below. For some implementations of the present disclosure, the following basic assumptions are applied.
> The conventional 5G beam design is followed.
> Multiple SSBs are transmitted on different beams.
> The UE recognizes beam information based on a received SSB/CSI-RS. The beam information may be, for example, a TCI, QCL, spatial information, or the like.
> Tx beamforming depends on the BS.
> Rx beamforming depends on the UE.

FIG. 10 illustrates a beam switching trigger according to some implementations of the present disclosure. In particular, FIG. 10 is shown to describe a periodicity-based beam switching trigger.

In some implementations of the present disclosure, switching a beam may mean, for example, switching an SSB or CSI-RS resource which the UE assumes to be QCLed with the DM-RS of a PDSCH or PDCCH when receiving the PDSCH or PDCCH on a cell. In another example, it may mean switching an SRS resource which the UE assumes to be QCLed with the DM-RS of a PUSCH or PUCCH when transmitting the PUSCH or PUCCH on a cell. While the implementations of the present disclosure related to beam switching are described below in the context of SSB switching by way of example, they may also be applied to CSI-RS resource switching.

In some implementations of the present disclosure, the following methods may be considered in relation to a beam switching trigger.

### > Alt 1. Timer-based

The UE may perform beam switching based on a timer. For example, the UE may start a preconfigured timer at a specific time point T0, and when the timer expires, the UE may change a beam. The timer for beam switching may be determined according to one of the following. That is, a time value for which the timer runs may be determined according to one of the following.
>> Alt 1-1. The UE may be configured with a timer for beam switching. For example, a value of the timer for beam switching may be included in an NTN configuration.
>> Alt 1-2. The UE may calculate a timer for beam switching based on satellite information (e.g., EphemerisInfo). The UE may report the timer to the BS.

The time point T0 when the timer starts may be determined by one or a combination of the following.
>> Alt 1-3. T0 may correspond to a time point when an initial access procedure is completed. For example, T0 may correspond to a time point when the UE receives a response to Message 3 (Msg3), which is a UL transmission scheduled by an RAR for the transmission of a random access preamble during the initial access procedure (e.g., a time point when Message 4 (Msg4) used for contention resolution is received).
>> Alt 1-4. T0 may correspond to a most recent time point when beam initialization or beam change has occurred.
>> Alt 1-5. An indicator triggering a timer may be transferred from the BS to the UE, and in this case, T0 may correspond to a time point when the indicator is received. The indicator triggering the timer may be transferred from the BS to the UE through DCI or a MAC control element (CE).

### > Alt 2. Periodicity-based

For each periodicity and time instance, the UE changes a beam. The periodicity and time instance for beam switching may be determined according to one of the following.
>> Alt 2-1. A start time and a periodicity may be configured for the UE by the network. Referring to FIG. 10(a), for example, when start time = 1 and periodicity = 5 are configured for the UE for beam switching, the UE may switch a (BS Tx or DL) beam (e.g., SSB index and/or CSI-RS resource) in each of time units (e.g., slots, subframes, or frames) 1, 6, 11, and 16. In some implementations, a parameter periodicityAndOffset representing a start time and a periodicity for beam switching is defined, and periodicityAndOffset may be broadcast to the UE by the network. According to the NTN Deployment-D4 scenario, UEs within a beam footprint covered by a satellite receive a service link through the same or similar BS Tx beams over time. In some implementations of the present disclosure, therefore, the network may broadcast periodicityAndOffset through a PBCH or system information of an NTN cell.
>> Alt 2-2. A time pattern and a periodicity may be configured for the UE by the network. Referring to FIG. 10(b), when a time pattern is configured for the UE, in which the periodicity corresponds to 10 time units (e.g., 10 slots, 10 subframes, or 10 frames) and time units 0, 3, and 5 within a period of that periodicity are defined as instances for beam switching, the UE may switch a (BS Tx or DL) beam (e.g., SSB index and/or CSI-RS resource) at each of time units 0, 3, and 5. According to the NTN Deployment-D4 scenario, UEs within a beam footprint covered by a satellite receive a service link through the same or similar BS Tx beams over time. In some implementations of the present disclosure, therefore, the network may broadcast periodicityAndOffset through a PBCH or system information of an NTN cell.

### > Alt 3. Indication-based

When a measurement result (e.g., RSRP) is worse than a configured/determined threshold, the UE changes a beam.
>> Alt 3-1. Beam switching may be triggered by a dynamic beam switching indication (BSI) provided by DCI from the BS. The BSI may be transferred through common/group-common DCI which may be transmitted/received in a CSS.
>> Alt 3-2. Beam switching may be triggered by a dynamic BSI of the UE.

In some implementations, the BSI of the UE may be provided to the network (e.g., BS) through UCI or a PUCCH. For example, the UE may provide the network with a new SSB index or CSI-RS resource to switch to, through the UCI or the PUCCH.

In some implementations, the BSI of the UE may be provided to the network through a PRACH. For example, the UE may inform the BS that the UE will communicate with the BS based on a new SSB index by transmitting the PRACH associated with the new SSB index to switch to.

### > Alt 4. Measurement-based

>> Alt 4-1. A threshold for beam switching may be configured for the UE.
>> Alt 4-2. A threshold for beam switching may be determined by the UE. In some implementations, the UE may determine the threshold based on satellite information (e.g., EphemerisInfo). When a beam is changed, the UE may notify the BS of the beam change, implicitly (e.g., by a PRACH transmission) or explicitly (e.g., by a PUCCH transmission).

Some implementations of the present disclosure for a beam switching method will be described below. For every triggering instance according to any one of the foregoing implementations of the present disclosure, a beam may be updated according to the following implementations of the present disclosure.

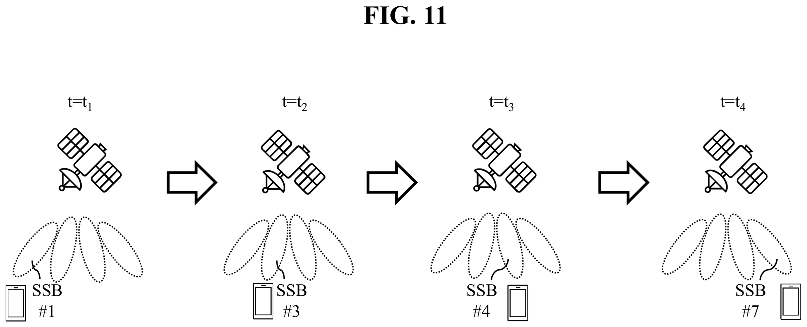

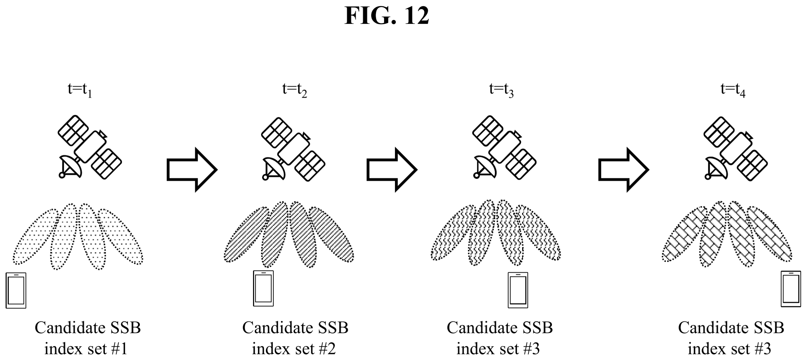

FIGS. 11 and 12 illustrate beam switching methods according to some implementations of the present disclosure. In particular, FIG. 11 is shown to describe a method for changing a beam according to a predefined beam pattern, and FIG. 12 is shown to describe a method for changing a beam within a set of candidate beams.

In some implementations of the present disclosure, the following methods may be considered for beam update.

### > Alt 1. Beam index increment

For example, an SSB index kₙ for a triggering instance n for beam switching may be determined by kₙ= k₀+ mod (n, N_{ssb}). Herein, k₀ may correspond to an SSB index selected during initial access, and N_{ssb} may correspond to the total number of SSBs transmitted on different beams. For example, N_{ssb} may be the total number of candidate SSB indexes on a corresponding cell.

In another example, if a current SSB index is k, an SSB index kₙ for an n^{th} triggering instance n for beam switching may be determined by kₙ= (k + △k*n) where △k is a beam offset (e.g., SSB index offset) between triggering instances. △k may be configured for the UE by the BS, or determined by the UE based on satellite information (e.g., EphemerisInfo).

### > Alt 2. Predefined beam pattern (semi-static method)

A set of beam indexes (e.g., a set of SSB indexes) are predefined, and a beam index may be changed for a triggering instance for beam switching according to a predefined order. Referring to FIG. 11, when the set of SSB indexes is predefined as {1, 3, 4, 7}, and triggering instances for beam switching are t = t₁, t = t₂, t = t₃, and t = t₄, then SSB switching to SSB #1 may be performed at triggering instance t = t₁, SSB switching to SSB #3 may be performed at triggering instance t = t₂, SSB switching to SSB #4 may be performed at triggering instance t = t₃, and SSB switching to SSB #7 may be performed at triggering instance t = t₄. In some implementations of the present disclosure, the beam indexes within the set of beam indexes may be cyclically applied to the triggering instances. For example, when a set of N beam indexes is predefined, and an i^{th} beam index among the N beam indexes is k'_{I} (where i=0,...,N-1), the beam index kₙ for the n^{th} triggering instance n may be determined by kₙ= {k₀+ mod (n, N)}. Herein, k₀ may be a beam index determined first among beam indexes that the UE first determines by applying the set of beam indexes. For example, during a cell search procedure, one of SSBs received on the cell is selected, and a random access procedure is performed, in which a PRACH associated with the selected SSB is transmitted to the network, and k₀ may be the index of the selected SSB. Alternatively, in some implementations, k₀ may be a beam index indicated as a beam index for a specific triggering instance (e.g., an initial triggering instance) to UE(s) by the network. The UE may determine a beam with the beam index kₙ= {k₀+ mod (n, N)} as a beam to be used for DL communication in the n^{th} triggering instance n after the predefined or preconfigured initial triggering instance.

### > Alt 3. Indication of new beam index (dynamic method)

A new beam index for a triggering instance for beam switching may be dynamically indicated.
>> In some implementations, the BS may indicate a new beam index (e.g., SSB index) to UE(s) through DCI (i.e., a PDCCH).
>> In some implementations, the UE may report a new beam index (e.g., SSB index) to the network through a PRACH/UCI PUCCH.

### > Alt 4. Indication of beam candidates

Considering that the distance/direction between a satellite and each UE within a beam footprint may be different, the network (e.g., BS) may indicate a (different) set of candidate beam indexes for each triggering instance. The UE may determine one of the candidate beam indexes for the triggering instance. For example, the UE may measure the RSRPs of candidate beams, compare them with a predefined threshold, and select one preferred beam from among beams having larger RSRP values. Referring to FIG. 12, the network may provide UE(s) with candidate SSB index set #1 for triggering instance t = t₁, candidate SSB index set #2 for triggering instance t = t₂, candidate SSB index set #3 for triggering instance t = t₃, and candidate SSB index set #4 for triggering instance t = t₄, and the UE may perform SSB switching to an SSB having an SSB index determined from SSB index set #1 at triggering instance t = t₁, SSB switching to an SSB having an SSB index determined from SSB index set #2 at triggering instance t = t₂, SSB switching to an SSB having an SSB index determined from SSB index set #3 at triggering instance t = t₃, and SSB switching to an SSB having an SSB index determined from SSB index set #4 at triggering instance t = t₄.

In relation to Alt 4, in some implementations of the present disclosure, sets of candidate beam indexes may be preconfigured, and cyclically applied to triggering instances. For example, when N sets of candidate beam indexes are configured, and an i^{th} set among the N sets of candidate beam indexes is k'ᵢ (where i=0,...,N-1), a set kₙ for an n^{th} triggering instance n may be determined by kₙ= {k₀+ mod (n, N)}. Herein, k₀ may be a first applied set of beam indexes among the beam index sets configured for the UE. For example, in some implementations, k₀ may be a set of beam indexes indicated as a set of beam indexes for a specific triggering instance (e.g., an initial triggering instance) to UE(s) by the network. For the n^{th} triggering instance n after the predefined or preconfigured initial triggering instance, the UE may determine a beam index to be used for DL communication within the set of beam indexes, kₙ= {k₀+ mod (n, N)}. When a specific number of sets of candidate beam indexes are (semi-statically) preconfigured for UE(s) by the network, the afore-described Alt 2 may correspond to a case where the size of a set of candidate beam indexes is 1 in Alt 4. That is, Alt 2 may correspond to a special case of Alt 4.

In relation to Alt 4, in some implementations of the present disclosure, a set of candidate beam indexes may be indicated dynamically (e.g., through DCI) for a triggering instance. The UE may determine a beam index from a set of candidate beam indexes indicated for a triggering instance n through DCI, and determine a beam with the determined beam index as a beam to be used until before the next triggering instance after the triggering instance n.

In some implementations of the present disclosure, the UE may receive an NTN configuration including parameters (e.g., ephemeris data and the like) to access a wireless communication service (e.g., 5G, 6G, or the like) by NTN access. The NTN configuration may include parameter(s) for beam switching triggering (e.g., a timer for beam switching, information related to a start time and periodicity for beam switching, information related to a time pattern and a periodicity for beam switching, or a threshold for beam switching) and/or parameters (e.g., a beam offset, a beam pattern, or sets of candidate beam indexes) for a beam switching method, according to some implementations of the present disclosure.

According to some implementations of the present disclosure, a beam may be changed without a BFR procedure. According to some implementations of the present disclosure, beam switching with low latency is possible.

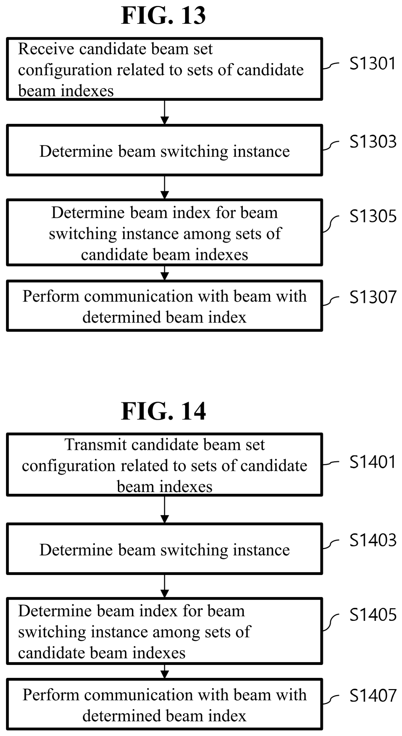

FIG. 13 illustrates part of a DL reception flow according to some implementations of the present disclosure.

A UE may receive a candidate beam set configuration related to candidate beam indexes for a cell (e.g., an NTN cell) (S1301). The UE may determine an instance for beam switching (hereinafter, beam switching instance) according to some implementations of the present disclosure for beam switching triggering (S1303). The UE may determine a beam index (e.g., SSB index, CSI-RS resource ID, or the like) for the beam switching instance according to some implementations of the present disclosure for a beam switching method (S1305). The UE may stop performing DL reception(s) on the cell based on a beam with an existing beam index at the beam switching instance, and after the beam switching instance, the UE may perform DL reception(s) on the cell based on a beam with the determined beam index (until there is beam switching at another beam switching instance) (S1307).

FIG. 14 illustrates part of a DL transmission flow according to some implementations of the present disclosure.

A network (e.g., BS) may transmit a candidate beam set configuration related to candidate beam indexes for a cell (e.g., an NTN cell) (S1401). A UE may determine an instance for beam switching (hereinafter, beam switching instance) according to some implementations of the present disclosure for beam switching triggering (S1403). The UE may determine a beam index (e.g., SSB index, CSI-RS resource ID, or the like) for the beam switching instance according to some implementations of the present disclosure for a beam switching method (S1405). The UE may stop performing DL transmission(s) on the cell based on a beam with an existing beam index at the beam switching instance, and after the beam switching instance, the UE may perform DL transmission(s) on the cell based on a beam with the determined beam index until there is beam switching at another beam switching instance (S1407).

In relation to reception of a PDCCH, a UE may perform operations according to some implementations of the present disclosure. The UE may include at least one transceiver, at least one processor, and at least one computer memory operably connectable to the at least one processor and storing instructions that, when executed, cause the at least one processor to perform operations according to some implementations of the present disclosure. A processing device for a UE may include at least one processor, and at least one computer memory operably connectable to the at least one processor and storing instructions that, when executed, cause the at least one processor to perform operations according to some implementations of the present disclosure. A (non-transitory) computer-readable storage medium may store at least one computer program including instructions that, when executed by at least one processor, cause the at least one processor to perform operations according to some implementations of the present disclosure. A computer program or computer program product may be recorded on at least one (non-transitory) computer-readable storage medium and include instructions that, when executed, cause (at least one processor) to perform operation according to some implementations of the present disclosure. In the UE, the processing device, the (non-transitory) computer-readable storage medium, and/or the computer program product, the operations may include receiving a candidate SSB set configuration related to sets of candidate SSB indexes for a cell, wherein the sets of candidate SSB indexes include at least a first set of candidate SSB indexes and a second set of candidate SSB indexes, determining a first SSB index within the first set of candidate SSB indexes, based on the candidate SSB set configuration, performing a first DL reception on the cell, based on a first SSB with the first SSB index, determining a first instance for SSB switching, determining a second SSB index for the first instance within the second set of candidate SSB indexes, and performing a second DL reception on the cell, based on a second SSB with the second SSB index after the first instance.

In some implementations, the operations may further include determining an SSB index for a second instance different from the first instance, within a set of candidate SSB indexes different from the second set of candidate SSB indexes among the sets of candidate SSB indexes.

In some implementations, each of the sets of candidate SSB indexes may include a plurality of SSB indexes.

In some implementations, each of the sets of candidate SSB indexes may include a single SSB index.

In some implementations, the operations may include receiving an NTN configuration including satellite ephemeris information.

In some implementations, the candidate SSB set configuration may be included in the NTN configuration.

In some implementations, the operations may further include starting a timer based on the determination of the first SSB index. In some implementations, the first instance for SSB switching may be based on expiration of the timer.

In some implementations, the NTN configuration may include a value of the timer.

In some implementations, the operations may include determining a value of the timer based on the satellite ephemeris information included in the NTN configuration, and reporting the value of the timer.

In some implementations, the operations may further include receiving information related to a start time and a periodicity for SSB switching. In some implementations, the first instance for SSB switching may be determined based on the information related to the start time and the periodicity.

In some implementations, the operations may further include receiving information related to a start pattern and a periodicity for SSB switching. In some implementations, the first instance for SSB switching may be determined based on the information related to the time pattern and the periodicity.

In some implementations, the operations may include detecting a DCI format including a beam switching indication. In some implementations, the first instance for SSB switching may be determined based on the detection of the DCI format.

In some implementations, the DCI format may be received in a common search space.

In some implementations, the first instance for SSB switching may be determined, based on an RSRP based on the first SSB being equal to or less than a threshold.

In relation to transmission of a PDCCH, a BS may perform operations according to some implementations of the present disclosure. The BS may include at least one transceiver, at least one processor, and at least one computer memory operably connectable to the at least one processor and storing instructions that, when executed, cause the at least one processor to perform operations according to some implementations of the present disclosure. A processing device for a BS may include at least one processor, and at least one computer memory operably connectable to the at least one processor and storing instructions that, when executed, cause the at least one processor to perform operations according to some implementations of the present disclosure. A (non-transitory) computer-readable storage medium may store at least one computer program including instructions that, when executed by at least one processor, cause the at least one processor to perform operations according to some implementations of the present disclosure. A computer program or computer program product may be recorded on at least one (non-transitory) computer-readable storage medium and include instructions that, when executed, cause (at least one processor) to perform operation according to some implementations of the present disclosure. In the BS, the processing device, the (non-transitory) computer-readable storage medium, and/or the computer program product, the operations may include transmitting a candidate SSB set configuration related to sets of candidate SSB indexes for a cell, wherein the sets of candidate SSB indexes include at least a first set of candidate SSB indexes and a second set of candidate SSB indexes, determining a first SSB index within the first set of candidate SSB indexes, based on the candidate SSB set configuration, performing a first DL transmission on the cell, based on a first SSB with the first SSB index, determining a first instance for SSB switching, determining a second SSB index for the first instance within the second set of candidate SSB indexes, and performing a second DL transmission on the cell, based on a second SSB with the second SSB index after the first instance.

In some implementations, each of the sets of candidate SSB indexes may include a plurality of SSB indexes.

In some implementations, each of the sets of candidate SSB indexes may include a single SSB index.

In some implementations, the operations may include transmitting an NTN configuration including satellite ephemeris information.

In some implementations, the candidate SSB set configuration may be included in the NTN configuration.

In some implementations, the operations may further include starting a timer based on the determination of the first SSB index. In some implementations, the first instance for SSB switching may be based on expiration of the timer.

In some implementations, the NTN configuration may include a value of the timer.

In some implementations, the operations may include receiving a value of the timer from a UE.

In some implementations, the operations may further include transmitting information related to a start time and a periodicity for SSB switching. In some implementations, the first instance for SSB switching may be determined based on the information related to the start time and the periodicity.

In some implementations, the operations may further include transmitting information related to a start pattern and a periodicity for SSB switching. In some implementations, the first instance for SSB switching may be determined based on the information related to the time pattern and the periodicity.

In some implementations, the operations may include transmitting a DCI format including a beam switching indication. In some implementations, the first instance for SSB switching may be determined based on the detection of the DCI format.

In some implementations, the DCI format may be transmitted in a common search space.

The above-described examples of the present disclosure are provided to enable those skilled in the art to implement and practice the present disclosure. Although the present disclosure has been described with reference to the examples of the present disclosure, those skilled in the art may make various modifications and changes to the examples of the present disclosure. Therefore, the present disclosure is not intended to be limited to the examples described herein, but rather to afford the widest scope consistent with the principles and novel features described herein.

Implementations of the present disclosure may be used for a BS, a UE, or other equipment in a wireless communication system.

## Claims

1. A method for receiving a downlink signal by a user equipment (UE) in a wireless communication system supporting a non-terrestrial network (NTN), the method comprising:
receiving a candidate synchronization signal block (SSB) set configuration related to sets of candidate SSB indexes for a cell, wherein the sets of candidate SSB indexes include at least a first set of candidate SSB indexes and a second set of candidate SSB indexes;
determining a first SSB index within the first set of candidate SSB indexes, based on the candidate SSB set configuration;
performing a first downlink reception on the cell, based on a first SSB with the first SSB index;
determining a first instance for SSB switching;
determining a second SSB index for the first instance within the second set of candidate SSB indexes; and
performing a second downlink reception on the cell, based on a second SSB with the second SSB index after the first instance.

2. The method of claim 1, further comprising determining an SSB index for a second instance different from the first instance, within a set of candidate SSB indexes different from the second set of candidate SSB indexes among the sets of candidate SSB indexes.

3. The method of claim 1, wherein each of the sets of candidate SSB indexes includes a plurality of SSB indexes.

4. The method of claim 1, wherein each of the sets of candidate SSB indexes includes a single SSB index.

5. The method of claim 1, further comprising receiving an NTN configuration including satellite ephemeris information.

6. The method of claim 5, wherein the candidate SSB set configuration is included in the NTN configuration.

7. The method of claim 5, further comprising starting a timer based on the determination of the first SSB index,
wherein the first instance for SSB switching is based on expiration of the timer.

8. The method of claim 7, wherein the NTN configuration includes a value of the timer.

9. The method of claim 7, further comprising:
determining a value of the timer based on the satellite ephemeris information included in the NTN configuration; and
reporting the value of the timer.

10. The method of claim 1, further comprising receiving information related to a start time and a periodicity for SSB switching,
wherein the first instance for SSB switching is determined based on the information related to the start time and the periodicity.

11. The method of claim 1, further comprising receiving information related to a start pattern and a periodicity for SSB switching,
wherein the first instance for SSB switching is determined based on the information related to the time pattern and the periodicity.

12. The method of claim 1, further comprising detecting a downlink control information (DCI) format including a beam switching indication,
wherein the first instance for SSB switching is determined based on the detection of the DCI format.

13. The method of claim 12, wherein the DCI format is received in a common search space.

14. The method of claim 1, wherein the first instance for SSB switching is determined, based on a reference signal received power (RSRP) based on the first SSB being equal to or less than a threshold.

15. A user equipment (UE) for receiving a downlink signal in a wireless communication system supporting a non-terrestrial network (NTN), the UE comprising:
at least one transceiver;
at least one processor; and
at least one computer memory operably connectable to the at least one processor and storing instructions that, when executed, cause the at least one processor to perform operations,
wherein the operations include:
receiving a candidate synchronization signal block (SSB) set configuration related to sets of candidate SSB indexes for a cell, wherein the sets of candidate SSB indexes include at least a first set of candidate SSB indexes and a second set of candidate SSB indexes;
determining a first SSB index within the first set of candidate SSB indexes, based on the candidate SSB set configuration;
performing a first downlink reception on the cell, based on a first SSB with the first SSB index;
determining a first instance for SSB switching;
determining a second SSB index for the first instance within the second set of candidate SSB indexes; and
performing a second downlink reception on the cell, based on a second SSB with the second SSB index after the first instance.

16. A processing device in a wireless communication system, comprising:
at least one processor; and
at least one computer memory operably connectable to the at least one processor and storing instructions that, when executed, cause the at least one processor to perform operations,
wherein the operations include:
receiving a candidate synchronization signal block (SSB) set configuration related to sets of candidate SSB indexes for a cell, wherein the sets of candidate SSB indexes include at least a first set of candidate SSB indexes and a second set of candidate SSB indexes;
determining a first SSB index within the first set of candidate SSB indexes, based on the candidate SSB set configuration;
performing a first downlink reception on the cell, based on a first SSB with the first SSB index;
determining a first instance for SSB switching;
determining a second SSB index for the first instance within the second set of candidate SSB indexes; and
performing a second downlink reception on the cell, based on a second SSB with the second SSB index after the first instance.

17. A computer-readable storage medium storing at least one program code including instructions that, when executed, cause at least one processor to perform operations,
wherein the operations include:
receiving a candidate synchronization signal block (SSB) set configuration related to sets of candidate SSB indexes for a cell, wherein the sets of candidate SSB indexes include at least a first set of candidate SSB indexes and a second set of candidate SSB indexes;
determining a first SSB index within the first set of candidate SSB indexes, based on the candidate SSB set configuration;
performing a first downlink reception on the cell, based on a first SSB with the first SSB index;
determining a first instance for SSB switching;
determining a second SSB index for the first instance within the second set of candidate SSB indexes; and
performing a second downlink reception on the cell, based on a second SSB with the second SSB index after the first instance.

18. A method for transmitting a downlink signal by a base station (BS) in a wireless communication system supporting a non-terrestrial network (NTN), the method comprising:
transmitting a candidate synchronization signal block (SSB) set configuration related to sets of candidate SSB indexes for a cell, wherein the sets of candidate SSB indexes include at least a first set of candidate SSB indexes and a second set of candidate SSB indexes;
determining a first SSB index within the first set of candidate SSB indexes, based on the candidate SSB set configuration;
performing a first downlink transmission on the cell, based on a first SSB with the first SSB index;
determining a first instance for SSB switching;
determining a second SSB index for the first instance within the second set of candidate SSB indexes; and
performing a second downlink transmission on the cell, based on a second SSB with the second SSB index after the first instance.

19. A base station (BS) for receiving a downlink signal in a wireless communication system supporting a non-terrestrial network (NTN), the BS comprising:
at least one transceiver;
at least one processor; and
at least one computer memory operably connectable to the at least one processor and storing instructions that, when executed, cause the at least one processor to perform operations,
wherein the operations include:
transmitting a candidate synchronization signal block (SSB) set configuration related to sets of candidate SSB indexes for a cell, wherein the sets of candidate SSB indexes include at least a first set of candidate SSB indexes and a second set of candidate SSB indexes;
determining a first SSB index within the first set of candidate SSB indexes, based on the candidate SSB set configuration;
performing a first downlink transmission on the cell, based on a first SSB with the first SSB index;
determining a first instance for SSB switching;
determining a second SSB index for the first instance within the second set of candidate SSB indexes; and
performing a second downlink transmission on the cell, based on a second SSB with the second SSB index after the first instance.

20. A processing device in a wireless communication system, comprising:
at least one processor; and
at least one computer memory operably connectable to the at least one processor and storing instructions that, when executed, cause the at least one processor to perform operations,
wherein the operations include:
transmitting a candidate synchronization signal block (SSB) set configuration related to sets of candidate SSB indexes for a cell, wherein the sets of candidate SSB indexes include at least a first set of candidate SSB indexes and a second set of candidate SSB indexes;
determining a first SSB index within the first set of candidate SSB indexes, based on the candidate SSB set configuration;
performing a first downlink transmission on the cell, based on a first SSB with the first SSB index;
determining a first instance for SSB switching;
determining a second SSB index for the first instance within the second set of candidate SSB indexes; and
performing a second downlink transmission on the cell, based on a second SSB with the second SSB index after the first instance.

21. A computer-readable storage medium storing at least one program code including instructions that, when executed, cause at least one processor to perform operations,
wherein the operations include:
transmitting a candidate synchronization signal block (SSB) set configuration related to sets of candidate SSB indexes for a cell, wherein the sets of candidate SSB indexes include at least a first set of candidate SSB indexes and a second set of candidate SSB indexes;
determining a first SSB index within the first set of candidate SSB indexes, based on the candidate SSB set configuration;
performing a first downlink transmission on the cell, based on a first SSB with the first SSB index;
determining a first instance for SSB switching;
determining a second SSB index for the first instance within the second set of candidate SSB indexes; and
performing a second downlink transmission on the cell, based on a second SSB with the second SSB index after the first instance.
